# EUROPEAN PATENT APPLICATION

(11) **EP 1 760 375 A1**
(43) Date of publication of application: **07.03.2007**
(21) Application number: 06017897.7
(22) Date of filing: 28.08.2006
(51) Int. Cl.: F16K 3/08

(54) **Valve for regulating and/or intercepting fluids**

(30) Priority: 06.09.2005 IT MI20051636
(71) Applicant: Effebi S.p.A., 25073 Bovezzo BS (IT)
(72) Inventor: Tanghetti, Ermanno, 25073 Bovezzo (BS) (IT)
(74) Representative: Valentini, Giuliano

(57) **Abstract**

A valve to regulate and/or shut off fluids, in which the shutter comprises at least one pair of perforated discs (51,52) made of ceramic material which can be operated by means of a rotatable valve body (20).

## Description

The present invention relates to a valve to shut off and/or proportionally regulate the flow of a fluid in a hydraulic system.

To regulate or shut off fluids in the various sections of hydraulic systems valves of various types are currently utilised, such as ball valves, gate valves and the like.

The function of these types of valves is essentially to allow isolation of one or more sections of a system, or in any case to regulate the flow of fluid in one or more sections. With reference to common hydraulic systems in the domestic environment, valves can be installed upstream of the meter to isolate the entire system, or upstream of branches of the system serving specific rooms, such as bathrooms and kitchens, and also upstream of specific domestic appliances supplied with water, such as washing machines, dishwashers or the like.

These valves often remain fixed in a specific position, either closed or fully or partially open, for long periods of time. Therefore calcareous deposits or small particles of debris can accumulate on shutters, or in the seats in which they are housed, causing the shutter to become blocked in this position. Therefore, when the valve requires to be operated, this can cause considerable difficulties, or even breakages or faults in components inside the valve.

Moreover, with the prior art valves generally used in these applications, such as ball valves, it can be difficult to obtain satisfactory proportional regulation of the flow of water in the branch of the system located downstream of the valve. In fact, due to the shape of the ball, minimum rotation of the shutter can cause noteworthy variation in the flow rate of fluid through the valve. For example, by opening the valve by 20% with respect to its total travel, a flow of fluid equivalent to approximately 80% of the maximum flow rate is obtained.

This being stated, an object of the present invention is to provide a valve to regulate and/or shut off fluids that makes it possible to prevent, or in any case limit as much as possible, blocking of the shutter in a specific position in which it remains for long periods of time. Another object of the present invention is to propose a valve of the aforesaid type that makes proportional regulation of the flow through said valve easier and more effective.

These objects are attained according to the invention thanks to a valve to regulate and/or shut off fluids, comprising a valve body, at least one shutter housed in the valve body and at least one member to operate the shutter, characterized in that the shutter comprises at least a pair of perforated discs made of ceramic material, in that the member to operate the shutter consists in the valve body and in that the valve body can rotate about an axis passing through the centre of the discs.

The valve body is supported revolvingly by a pair of connection elements positioned at the respective ends of said valve body. The valve according to the invention can thus be installed and moved also in positions otherwise not possible with prior art valves operated by means of a lever or butterfly handle.

The discs can have identical shape and dimensions, as can the relative holes or openings. Nonetheless, the shapes and dimensions of the discs and of the holes can also differ to produce specific desired regulations.

The discs are positioned coaxially inside the valve body and placed in mutual contact, one of the two discs being rotatable with respect to the other. In this way, a substantially linear path for the fluid is produced inside the valve.

Further characteristics and advantages of the present invention will be more apparent from the description hereunder, provided by way of example with reference to the accompanying schematic drawings, in which:
- Figure 1 is a perspective view of a valve according to the present invention;
- Figure 2 is an exploded perspective view of the essential components of a valve according to the present invention; and
- Figure 3 is a perspective view, according to a different angle than the one in Figure 2, of some components of a valve according to the present invention.

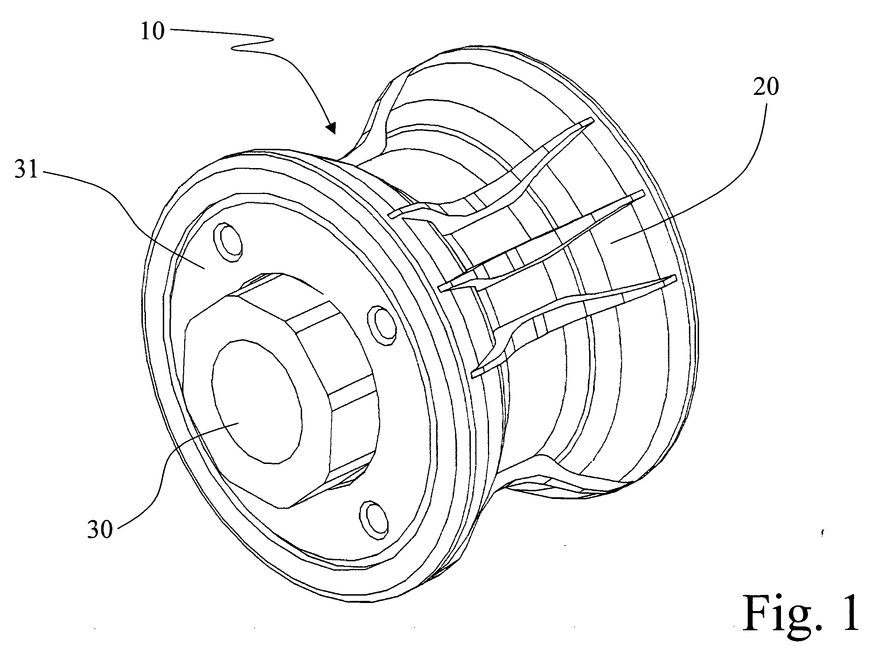

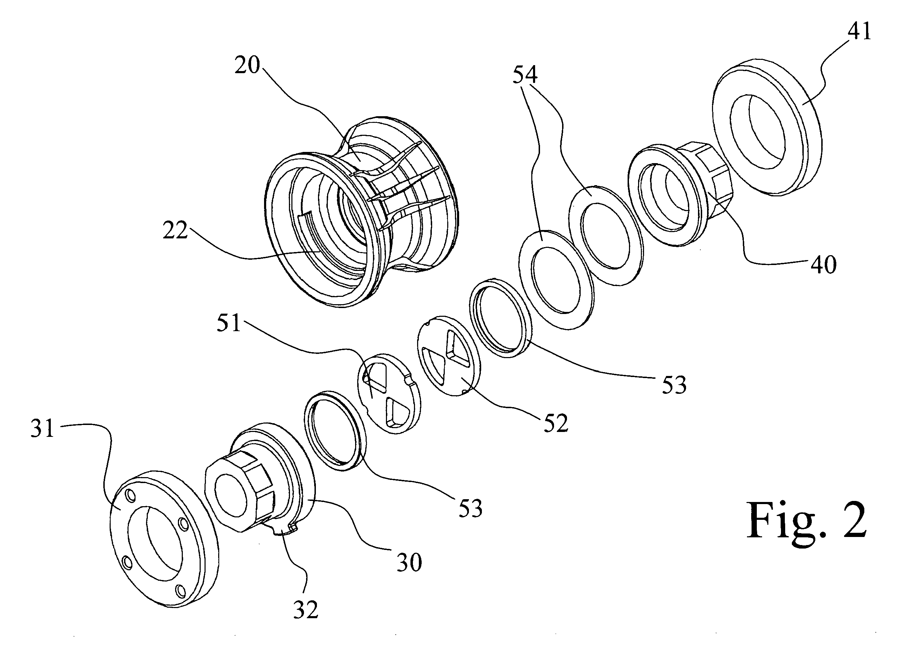

An embodiment of the valve 10 according to the present invention is shown in Figures 1 and 2, respectively in assembled and in disassembled condition.

The valve 10 comprises a valve body 20, associated with which are two connection elements 30 and 40 connected to the body 20 by means of ring nuts 31 and 41. Housed inside the body 20 is a shutter consisting in a pair of perforated discs 51 and 52 made of ceramic material.

The perforated discs 51 and 52 are positioned coaxially inside the valve body 20 and held mutually in contact between two O-rings 53.

A pair of rings 54 is also provided in contact with the connection element 40 to facilitate rotational movement of the shutter assembly with respect to said connection element.

The valve body 20 is supported revolvingly by the connection elements 30 and 40 and forms the operating member of the shutter of the valve 10. A radial projection 32 on the connection element 30 is engaged in a groove 22 inside the valve body 20 to limit the extent of rotation thereof.

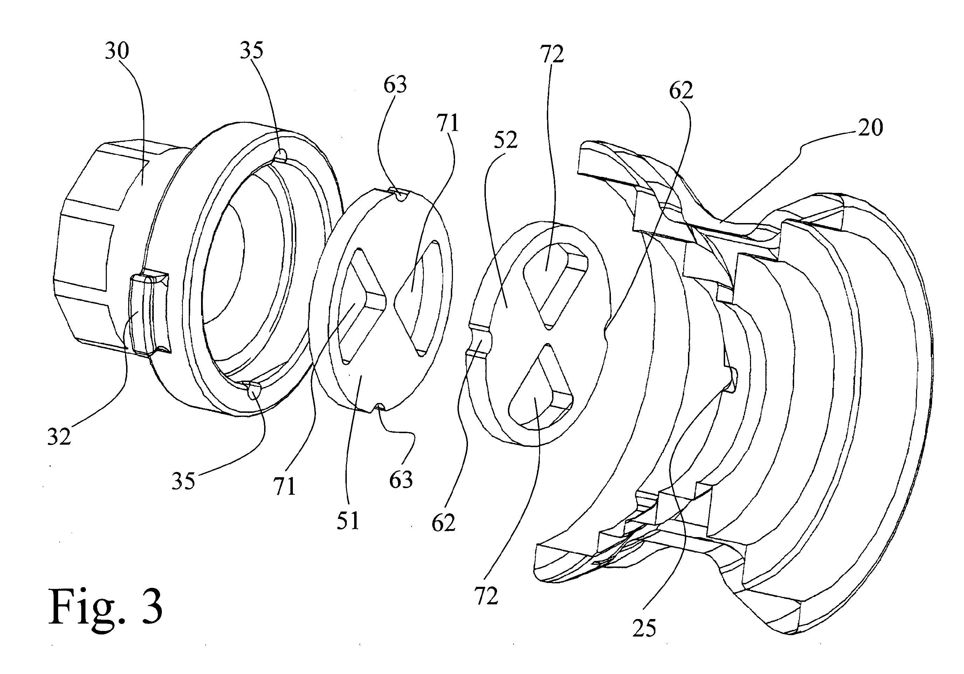

In the enlarged view of Figure 3, it can be noted that the disc 51 comprises a pair of recesses 63 corresponding to an identical pair of recesses 35 in the connection element 30. A pin, or other suitable means (not shown) can be housed in at least one, or also in both, of the opposed pairs of recesses 35 and 63 to allow the disc 51 to be held integral with the connection element 30. Alternatively, the disc 51 can be provided with projections that can be housed in the recesses 35.

In the same way, the disc 52 has a pair of recesses 62 corresponding to a pair of recesses 25 (only one of which is visible in Figure 3) in the valve body 20 to hold during rotation the disc 52 integral with the valve body 20 by means of one or more pins, or other similar means. Also in this case, the disc 52 can alternatively be provided with projections with shape and dimensions suitable to allow then be housed in the recesses 25.

In this way, the disc 51 remains integral with the connection element 30, while the disc 52 can be rotated with respect to the disc 51 acting externally on the valve body 20. The member to operate the shutter thus consists of the actual valve body 20, which can be rotated about an axis passing through the centre of the discs 51 and 52.

In the embodiment shown, the discs 51 and 52 are shown with substantially identical shape and dimensions, as are the holes 71 of the disc 51 and the holes 72 of the disc 52. Nonetheless, shape and dimensions of the discs and/or of the holes can also differ from one another as a function of the constructional requirements and/or of the desired type of regulation.

As can be noted from the description hereinbefore, the valve body 20, the discs 51, 52 and the connection elements 30 and 40 all have at least one cylindrical axis of symmetry in common with one another, to produce a substantially linear path for the flow of the fluid regulated by the valve 10.

## Claims

1. A valve to regulate and/or shut off fluids, comprising a valve body, a shutter housed in said valve body and at least one member to operate said shutter, **characterized in that** said shutter comprises at least a pair of perforated discs made of ceramic material, **in that** said member to operate the shutter is formed of said valve body and **in that** said valve body can rotate about an axis passing through the centre of said discs.

2. The valve as claimed in claim 1, wherein at least one of said discs is rotatable with respect to the other about an axis passing through the centre of said at least one disc.

3. The valve as claimed in claim 1, wherein said discs are positioned coaxially inside said valve body and placed in mutual contact.

4. The valve as claimed in claim 1, wherein said valve body is supported revolvingly by a pair of connection elements positioned at the respective ends of said valve body.

5. The valve as claimed in any one of the preceding claims, wherein at least one of said discs is integral in rotation with said valve body and the other of said discs is integral with at least one of said connection elements, and wherein said valve body, said discs and said connections all have at least one cylindrical axis of symmetry in common with one another.
